# EUROPEAN PATENT APPLICATION

(11) **EP 4 794 173 A2**
(43) Date of publication of application: **19.08.2026**
(21) Application number: 26183283.6
(22) Date of filing: 09.08.2022
(51) Int. Cl.: H02J 50/80

(54) **A POWER TRANSFER APPARATUS AND METHOD THEREFOR**

(30) Priority: 16.08.2021 EP 21191466
(62) Document number(s) of the earlier application(s) in accordance with Art. 76 EPC: 24212566.4 / 4 503 386; 22764682.5 / 4 388 636
(71) Applicant: Koninklijke Philips N.V., 5656 AE Eindhoven (NL)
(72) Inventor: AGAFONOV, Aleksei, Eindhoven (NL); STARING, Antonius Adriaan Maria, Eindhoven (NL)
(74) Representative: Philips Intellectual Property & Standards

(57) **Abstract**

A power transmitter and/or receiver for a wireless power transfer system comprises a power transfer coil (103, 107) arranged to exchange power via a power transfer signal. A receiver (207, 307) is arranged to receive first data from the complementary power transfer apparatus. The first data is modulated onto the power transfer signal in accordance with a first modulation scheme where each data symbol is represented by a sequence of time intervals each having a constant modulation level dependent on a data symbol value for the data symbol. A transmitter (205, 305) is arranged to transmit second data to the complementary power transfer apparatus by modulating the power transfer signal in accordance with a second modulation scheme. The symbol duration for data symbols of the second modulation scheme are a divisor of a duration of at least one time interval of the sequence of time intervals. A synchronizer (209, 309) is further arranged to synchronize the transmitter (205, 305) to transmit the second data aligned with the first data by synchronizing the transmission of the second data to the power transfer signal.

## Description

### FIELD OF THE INVENTION

The invention relates to a wireless power transfer apparatus and a method therefor, and in particular, but not exclusively, to a wireless power transfer apparatus for a Wireless Power Consortium wireless power transfer system, such as a Qi type power transfer system.

### BACKGROUND OF THE INVENTION

Most present-day electrical products require a dedicated electrical contact in order to be powered from an external power supply. However, this tends to be impractical and requires the user to physically insert connectors or otherwise establish a physical electrical contact. Typically, power requirements also differ significantly, and currently most devices are provided with their own dedicated power supply resulting in a typical user having a large number of different power supplies with each power supply being dedicated to a specific device. Although, the use of internal batteries may avoid the need for a wired connection to a power supply during use, this only provides a partial solution as the batteries will need recharging (or replacing). The use of batteries may also add substantially to the weight and potentially cost and size of the devices.

In order to provide a significantly improved user experience, it has been proposed to use a wireless power supply wherein power is inductively transferred from a transmitter inductor in a power transmitter device to a receiver coil in the individual devices.

Power transmission via magnetic induction is a well-known concept, mostly applied in transformers having a tight coupling between a primary transmitter inductor/coil and a secondary receiver coil. By separating the primary transmitter coil and the secondary receiver coil between two devices, wireless power transfer between these becomes possible based on the principle of a loosely coupled transformer.

Such an arrangement allows a wireless power transfer to the device without requiring any wires or physical electrical connections to be made. Indeed, it may simply allow a device to be placed adjacent to, or on top of, the transmitter coil in order to be recharged or powered externally. For example, power transmitter devices may be arranged with a horizontal surface on which a device can simply be placed in order to be powered.

Furthermore, such wireless power transfer arrangements may advantageously be designed such that the power transmitter device can be used with a range of power receiver devices. In particular, a wireless power transfer approach, known as the Qi Specifications, has been defined and is currently being developed further. This approach allows power transmitter devices that meet the Qi Specifications to be used with power receiver devices that also meet the Qi Specifications without these having to be from the same manufacturer or having to be dedicated to each other. The Qi standard further includes some functionality for allowing the operation to be adapted to the specific power receiver device (e.g. dependent on the specific power drain).

The Qi Specification is developed by the Wireless Power Consortium and more information can e.g. be found on their website http://www.wirelesspowerconsortium.com where in particular the defined Specification documents can be found.

Further developments seek to introduce a range of new applications and features. For example, the Wireless Power Consortium is developing a standard based on extending the principles of Qi to apply to a range of kitchen applications and appliances, including heaters, kettles, blenders, pans, etc. The developments in particular support much higher power levels for the power transfer and are known as the Cordless Kitchen standard.

The Qi standard supports communication from the power receiver to the power transmitter thereby enabling the power receiver to provide information that may allow the power transmitter to adapt to the specific power receiver. In the current standard, a unidirectional communication link from the power receiver to the power transmitter has been defined wherein the power receiver communicates by performing load modulation of the power transfer signal transferring the power. Specifically, the loading of the power transfer signal by the power receiver is varied to provide a modulation of the power signal. The resulting changes in the electrical characteristics (e.g. variations in the current draw) can be detected and decoded (demodulated) by the power transmitter.

Thus, at the physical layer, the communication channel from power receiver to the power transmitter uses the power transfer signal as a data carrier. The power receiver modulates a load which is detected by a change in the amplitude and/or phase of the transmitter coil current or voltage. The data is formatted in bytes and packets.

More information can be found in chapter 6 of part 1 of the Qi wireless power specification (version 1.0).

Initially, Qi utilized only a unidirectional communication link, but bidirectional communication links have been introduced to allow more advanced control and flexibility of the power transfer operations. Communication from the power transmitter to the power receiver may for example be achieved by modulating the power transfer signal, e.g. using amplitude, frequency, or phase modulation.

Communication in wireless power transfer systems serving several purposes including negotiation of power transfer parameters, control of the wireless power transfer, power transmitter and/or power receiver authentication, power transmitter firmware update, or other auxiliary data transfer. The communication performance is important for the operation of the power transfer system.

For example, it is important for power receiver safety to provide feedback control messages to the power transmitter with precise timing in order to ensure the control loop stability. This communication link is simplex from the power receiver to the power transmitter and is usually implemented as load modulation of the power transfer signal performed on the power receiver side.

Other communications require a communication channel from the wireless power transmitter to the wireless power receiver (e.g., for certificate transfer during authentication). Usually, this channel is implemented as a frequency modulation of the power transfer signal.

In many systems, the power transfer signal is accordingly used for communications in both directions and thus the power transfer signal is used to support two communication links.

In order to provide efficient communication, power transfer systems typically in such cases utilize time division where the communication directions/ channels are multiplexed and divided in time. Specifically, a repeating time frame is typically divided into two (or more) time intervals with only one communication channel being active in each time interval.

Such a half-duplex communication may provide efficient and/or reliable communication in many situations. However, the approach also has some disadvantages, including:
The bandwidth of both channels is reduced.

Response times and communication delays may be increased. As communication must be performed in dedicated time slots defined by the half-duplex protocol, it is not possible to initiate the communication at any desired moment.

An increased overhead may result from fractioning of larger packets. Since power transfer control must have exact timings, the maximum payload to be transferred may be constrained by the time between two consecutive control messages.

Insufficient error correction may result for e.g. larger packets. The receiving side may for example not be able to indicate if a large packet contains error(s) before communication handover occurs.

Hence, an improved power transfer approach would be advantageous, and in particular, an approach allowing increased flexibility, reduced cost, reduced complexity, improved communication performance, reduced communication delay, increased data rates, reliable communication, more reliable operation, improved error detection, and/or improved performance would be advantageous.

WO 2015/150107 A1 describes a wireless power system with two-way communication between the power transmitter and the power receiver, wherein the communication utilizes modulation of the power signal.

### SUMMARY OF THE INVENTION

Accordingly, the Invention seeks to preferably mitigate, alleviate or eliminate one or more of the above mentioned disadvantages singly or in any combination.

According to an aspect of the invention, there is provided power transfer apparatus for wireless power transfer from a power transmitter to a power receiver, the power transfer apparatus being one of the power transmitter and the power receiver , the power transfer apparatus comprising: a power transfer coil arranged to exchange power with a complementary power transfer coil of a complementary power transfer apparatus via a power transfer signal, the complementary power transfer apparatus being the other of the power transmitter and the power receiver; a receiver arranged to receive first data from the complementary power transfer apparatus, the first data being modulated onto the power transfer signal in accordance with a first modulation scheme in which each data symbol is represented by a sequence of time intervals each having a constant modulation level dependent on a data symbol value for the data symbol, the sequence of time intervals being synchronized to the power transfer signal; a transmitter arranged to transmit second data to the complementary power transfer apparatus by modulating the power transfer signal in accordance with a second modulation scheme, a symbol duration for data symbols of the second modulation scheme being a divisor of a duration of at least one time interval of the sequence of time intervals; and a synchronizer arranged to synchronize the transmitter to transmit the second data aligned with the first data by synchronizing the transmission of the second data to the power transfer signal.

The invention may allow improved performance and/or operation in many wireless power transfer systems. Improved communication performance may be achieved in many applications and scenarios. In many applications, a reduced communication delay, increased data rate, and/or more flexible communication may be achieved in one or both communication directions. In many scenarios, such improvements may be achieved while still maintaining an acceptable reliability of the communication and specifically may allow such operation while maintaining an acceptable error rate.

The approach may reduce the impact of interference between the communications in the different direction while allowing these to simultaneously use the power transfer signal as a communication carrier.

The approach may allow improved overall power transfer operation in many embodiments and scenarios, such as e.g. by allowing faster messaging reducing delays for power control operation, authentication, negotiation, etc.

The operation, and specifically the simultaneous communication of the first and second data may be performed during a power transfer phase. The power transfer phase may specifically be a phase during which a power transfer signal is generated for transferring power from the power transmitter to the power receiver. The power transfer phase may be a phase during which power control error messages are transmitted from the power receiver to the power transmitter. The power transmitter and power receiver may implement a power control loop for the transfer of power during the power transfer phase. The power control loop may adapt a level of the power transfer signal in response to the power control error messages.

Each data symbol may in accordance with the first modulation scheme be represented by a pattern of constant modulation levels with the pattern being different for different data symbols. In some embodiments, each data symbol may in accordance with the second modulation scheme be represented by a pattern of constant modulation levels with the pattern being different for different data symbols.

A constant modulation level may be a constant frequency for a frequency modulation, a constant phase for phase modulation, a constant amplitude for amplitude modulation, a constant load for load modulation etc. The sequence of time intervals may include two or more time intervals and for at least one data symbol, and often for all data symbols, the modulation level may be different for at least two of the time intervals of the sequence of time intervals. A time interval having a constant modulation level may mean that a parameter of the power transfer signal being varied/ modulated depending on the data symbol is constant/ does not change during the time interval.

A modulation scheme may be e.g. a frequency modulation scheme, phase modulation scheme, amplitude modulation scheme, load modulation scheme, etc.

The duration for data symbols of the second modulation scheme being a divisor of the duration of at least one time interval of the sequence of time intervals is equivalent to a duration of at least one time interval of the sequence of time intervals being an integer multiple of the duration for data symbols of the second modulation scheme. The divisor/ multiple may be by a factor of one. The duration for data symbols of the second modulation scheme may be equal to the duration of at least one time interval of the sequence of time intervals.

The transmitter may be arranged to transmit second data to the complementary power transfer apparatus by modulating the power transfer signal in accordance with a second modulation scheme having a symbol duration such that a duration of time intervals of the sequence of time intervals are an integer multiple of the symbol duration;
The transmitter may be arranged to transmit second data to the complementary power transfer apparatus by modulating the power transfer signal in accordance with a second modulation scheme, a duration of the time intervals being an integer multiple of a symbol duration for data symbols of the second modulation scheme.

The synchronizer may be arranged to synchronize the transmitter to transmit the second data aligned with the sequence of time intervals of the first data by synchronizing the transmission of the second data to the power transfer signal.

According to an optional feature of the invention, the duration of the time intervals is at least twice the symbol duration for data symbols of the second modulation scheme.

This may provide improved performance and operation in many scenarios and applications. It may allow low complexity operation in many scenarios, and allow facilitated and/or improved communication. In many embodiments, the approach may allow facilitated asymmetric communication which may be particularly advantageous in many wireless power transfer systems.

According to an optional feature of the invention, the duration of the time intervals is at least eight times the symbol duration for data symbols of the second modulation scheme.

This may provide improved performance and operation in many scenarios and applications. It may allow low complexity operation in many scenarios, and allow facilitated and/or improved communication. In many embodiments, the approach may allow facilitated asymmetric communication which may be particularly advantageous in many wireless power transfer systems.

According to an optional feature of the invention, the first modulation scheme employs biphase modulation.

This may allow particularly advantageous operation in many applications and/or may provide facilitated operation. In particular, it may facilitate an approach reducing interference between communications in opposite directions in many applications. Each time interval of the sequence of time intervals may correspond to an interval of the biphase modulation. Each sequence of time intervals may comprise two intervals.

In some embodiments, the first modulation scheme may employ a Manchester code.

According to an optional feature of the invention, an average modulation level for the transmission of the second data over a symbol duration for the transmission of the first data is independent of data values of the second data.

This may provide improved communication and wireless power transfer operation in many applications and scenarios. In particular, it may allow improved communication by reducing interference between communications in both directions. The approach may in many scenarios reduce interference from transmission of the second data to receiving the first data.

According to an optional feature of the invention, the transmitter is arranged to transmit a number of dummy symbols in order to align a data size for the second data to a symbol duration for the first data.

This may provide improved performance in many embodiments and applications.

In many embodiments the transmitter is arranged to transmit a number of dummy symbols in order to align a data packet (size) for the second data to the time intervals.

According to an optional feature of the invention, the transmitter is arranged to continuously transmit second data unless the first data meets a non-acknowledgement criterion.

This may provide improved communication in many embodiments and may in many applications allow a higher throughput where data is continuously transmitted and action is only taken in case an error or undesired situation occurs.

The non-acknowledgement criterion may for example include a consideration that an expected acknowledgement message is not received.

According to an optional feature of the invention, the transmitter is arranged to retransmit second data in response to the first data meeting the non-acknowledgement criterion.

According to an optional feature of the invention, the power transfer apparatus is the power receiver, the first modulation scheme uses frequency modulation, and the second modulation scheme uses load modulation.

This may allow particularly advantageous operation and/or performance and/or implementation in many scenarios.

According to an optional feature of the invention, the power transfer apparatus is the power transmitter, the first modulation scheme uses load modulation, and the second modulation scheme uses frequency modulation.

This may allow particularly advantageous operation and/or performance and/or implementation in many scenarios.

According to an optional feature of the invention, the synchronizer is arranged to synchronize the transmitter in response to an amplitude variation of the power transfer signal.

According to an optional feature of the invention, the synchronizer is arranged to synchronize the transmitter in response to cycles of the power transfer signal.

According to another aspect of the invention, there is provided power transfer system comprising a power receiver and power transmitter for performing a wireless power transfer from to the power receiver, the power transmitter comprising: a first power transfer coil arranged to transfer power to a second power transfer coil of the power receiver via a power transfer signal; a first receiver arranged to receive first data from the power receiver, the first data being modulated onto the power transfer signal in accordance with a first modulation scheme in which each data symbol is represented by a sequence of time intervals each having a constant modulation level dependent on a data symbol value for the data symbol, the sequence of time intervals being synchronized to the power transfer signal; a first transmitter arranged to transmit second data to the power receiver by modulating the power transfer signal in accordance with a second modulation scheme, a symbol duration for data symbols of the second modulation scheme being a divisor of a duration of at least one time interval of the sequence of time intervals; and a first synchronizer arranged to synchronize the transmitter to transmit the second data aligned with the first data by synchronizing the transmission of the second data to the power transfer signal; and the power receiver comprising: a second power transfer coil arranged to receive power from the first power transfer coil of the power transmitter via the power transfer signal; a second transmitter arranged to transmit first data to the power transmitter in accordance with the second modulation scheme; a second receiver arranged to receive second data from the power transmitter in accordance with the a second modulation scheme; and a second synchronizer arranged to synchronize the second transmitter to transmit the first data with time intervals of the sequence of time intervals aligned with the power transfer signal

According to another aspect of the invention, there is provided method of operation for a power transfer apparatus for wireless power transfer from a power transmitter to a power receiver, the power transfer apparatus being one of the power transmitter and the power receiver, the power transfer apparatus comprising: a power transfer coil arranged to exchange power with a complementary power transfer coil of a complementary power transfer apparatus via a power transfer signal, the complementary power transfer apparatus being the other of the power transmitter and the power receiver; the method comprising: receiving first data from the complementary power transfer apparatus, the first data being modulated onto the power transfer signal in accordance with a first modulation scheme in which each data symbol is represented by a sequence of time intervals each having a constant modulation level dependent on a data symbol value for the data symbol, the sequence of time intervals being synchronized to the power transfer signal; transmitting second data to the complementary power transfer apparatus by modulating the power transfer signal in accordance with a second modulation scheme, a symbol duration for data symbols of the second modulation scheme being a divisor of a duration of at least one time interval of the sequence of time intervals; and synchronizing the transmission of the second data to be aligned with the first data by synchronizing the transmission of the second data to the power transfer signal.

According to another aspect of the invention, there is provided method of operation for a power transfer system comprising a power receiver and power transmitter for performing a wireless power transfer from to the power receiver, the power transmitter comprising a first power transfer coil arranged to transfer power to a second power transfer coil of the power receiver via a power transfer signal and the power receiver comprising the second power transfer coil arranged to receive power from the first power transfer coil of the power transmitter via the power transfer signal; the method comprising the power transmitter performing the steps of: receiving first data from the power receiver, the first data being modulated onto the power transfer signal in accordance with a first modulation scheme in which each data symbol is represented by a sequence of time intervals each having a constant modulation level dependent on a data symbol value for the data symbol, the sequence of time intervals being synchronized to the power transfer signal; transmitting second data to the power receiver by modulating the power transfer signal in accordance with a second modulation scheme, a symbol duration for data symbols of the second modulation scheme being a divisor of a duration of at least one time interval of the sequence of time intervals; and synchronizing the transmission of the second data to be aligned with the first data by synchronizing the transmission of the second data to the power transfer signal; and the power receiver performing the steps of: transmitting first data to the power transmitter in accordance with the second modulation scheme; receiving second data from the power transmitter in accordance with the a second modulation scheme; and synchronizing the transmission of the first data to be aligned with the time intervals of the sequence of time intervals by synchronizing the transmission of the second data to the power transfer signal.

These and other aspects, features and advantages of the invention will be apparent from and elucidated with reference to the embodiment(s) described hereinafter.

### BRIEF DESCRIPTION OF THE DRAWINGS

Embodiments of the invention will be described, by way of example only, with reference to the drawings, in which
Fig. 1 illustrates an example of elements of a power transfer system in accordance with some embodiments of the invention;
Fig. 2 illustrates an example of elements of a power transmitter in accordance with some embodiments of the invention;
Fig. 3 illustrates an example of elements of a power receiver in accordance with some embodiments of the invention;
Fig. 4 illustrates an example of biphase coding;
Fig. 5 illustrates an example of transmission schemes in accordance with some embodiments of the invention;
Fig. 6 illustrates an example of an inverter for a power transmitter in accordance with some embodiments of the invention;
Fig. 7 illustrates an example of an inverter for a power transmitter in accordance with some embodiments of the invention;
Fig. 8 illustrates an example of a signals for a power transmitter in accordance with some embodiments of the invention;
Fig. 9 illustrates an example of transmission schemes in accordance with some embodiments of the invention;
Fig. 10 illustrates an example of transmission schemes in accordance with some embodiments of the invention; and
Fig. 11 illustrates an example of transmission schemes in accordance with some embodiments of the invention.

### DETAILED DESCRIPTION OF SOME EMBODIMENTS OF THE INVENTION

The following description focuses on embodiments of the invention applicable to a wireless power transfer system utilizing a power transfer approach such as known from the Qi or Ki specifications. However, it will be appreciated that the invention is not limited to this application but may be applied to many other wireless power transfer systems.

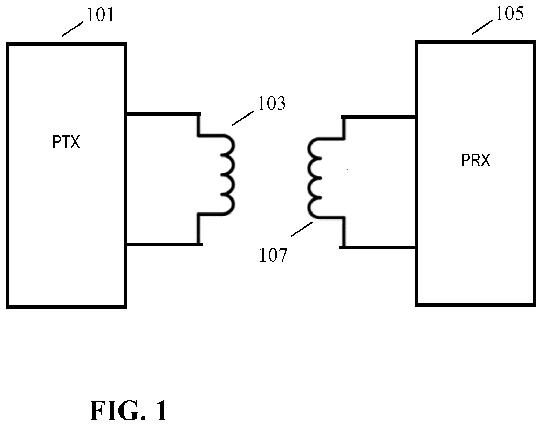

Fig. 1 illustrates an example of a power transfer system in accordance with some embodiments of the invention. The power transfer system comprises a power transmitter 101 which includes (or is coupled to) a transmitter coil / inductor 103. The system further comprises a power receiver 105 which includes (or is coupled to) a receiver coil/ inductor 107.

The system provides a wireless inductive power transfer from the power transmitter 101 to the power receiver 105. Specifically, the power transmitter 101 generates a wireless inductive power transfer signal (also referred to as a power transfer signal or an inductive power transfer signal), which is propagated as a magnetic flux by the transmitter coil or inductor 103. The power transfer signal may typically have a frequency between around 20 kHz to around 500 kHz, and often for Qi compatible systems typically in the range from 95 kHz to 205 kHz. For high power applications such as e.g. the Ki specifications developed for high power kitchen applications, the frequency may e.g. typically be in the range between 20kHz to 80kHz. The transmitter coil 103 and the receiver coil 107 are loosely coupled and thus the receiver coil 107 picks up (at least part of) the power transfer signal from the power transmitter 101. Thus, the power is transferred from the power transmitter 101 to the power receiver 105 via a wireless inductive coupling from the transmitter coil 103 to the receiver coil 107. The term power transfer signal is mainly used to refer to the inductive signal/ magnetic field between the transmitter coil 103 and the receiver coil 107 (the magnetic flux signal), but it will be appreciated that by equivalence it may also be considered and used as a reference to an electrical signal provided to the transmitter coil 103 or picked up by the receiver coil 107.

In the example, the power receiver 105 is specifically a power receiver which receives power via receiver coil 107. However, in other embodiments, the power receiver 105 may comprise a metallic element, such as a metallic heating element, in which case the power transfer signal induces eddy currents resulting in a direct heating of the element.

The system is arranged to transfer substantial power levels, and specifically the power transmitter may support power levels in excess of 500mW, 1W, 5W, 50W, 100W or 500W in many embodiments. For example, for Qi corresponding applications, the power transfers may typically be in the 1-5W power range for low power applications, and in excess of 100 W and up to more than 2000W for high power applications, such as e.g. those supported by the Ki Specifications being developed by the Wireless Power Consortium.

In the following, the operation of the power transmitter 101 and the power receiver 105 will be described with specific reference to an embodiment in accordance with the Qi Specification (except for the herein described (or consequential) modifications and enhancements).

The system of Fig. 1 utilizes bidirectional communication to support the power transfer operation. The bidirectional communication is used to configure, establish, and control the power transfer and may include exchange of a range of control data. In particular, a communication channel between the wireless power receiver and the wireless power transmitter is considered as critical in order to establish a feedback loop from the wireless power receiver to the wireless power transmitter, which is vital for power system stability.

The communication between the power transmitter and the power receiver may advantageously in many systems be achieved using the power transfer signal as a communication carrier. The communication transmitter of the power transmitter or power receiver may modulate the power transfer signal in response to the data being transmitted and the complementary power receiver may demodulate the power transfer signal to retrieve the data. Communication using the power transfer signal is also known as an in-band communication.

Many systems, such as specifically Qi, uses the power transfer signal for communication in both directions and thus data is communicated in opposite directions using the same communication carrier. Thus, a particular situation in such systems is that a single power transfer signal that transfer powers between the devices is also used as a communication carrier for multiple communication links in opposite directions.

In order to support such multiple communications, systems such as Qi employ a time division approach where communication in the two directions are performed in different time intervals such that communication is only performed in one direction at a time. Specifically, a repeating time frame may be employed for the power transfer signal with the time frame comprising distinct time intervals for communication from the power transmitter to the power receiver (henceforth also referred to as the forward direction of forward communication) and for communication from the power receiver to the power transmitter (henceforth referred to as the reverse direction or reverse communication).

Such an approach may achieve independence between the communication in the different directions. This is particularly difficult to achieve in wireless power transfer systems using the power transfer signal as a carrier for multiple communications. In particular, using different modulation schemes and techniques is typically insufficient to separate the communications.

Specifically, Qi uses frequency modulation for forward communication and load modulation for reverse communication. Load modulation can be seen as an example of amplitude modulation in that the receiver detects amplitude variations of the power transfer signal caused by the load modulation/ changes. However, the amplitude of the power transfer signal typically also depends on the frequency of the power transfer signal, and indeed in many systems, frequency variations are used to adapt the power level of the power transfer signal. Thus, frequency modulation will directly cause amplitude variations. Further, frequency modulation variations are typically detected by a frequency demodulator that may also have some sensitivity to (especially fast) amplitude variations of the carrier, i.e. of the power transfer signal. Thus, cross-interference tends to be particularly difficult to address for wireless power transfer systems resulting in most such systems using a time division approach to isolate the communications from each other.

However, such an approach also has disadvantages. It substantially reduces the available communication capacity, and specifically the effective data rate tends to be reduced substantially compared to the maximum available in both directions if only one communication was performed. In addition, a substantial communication delay may result as communication cannot be performed until the time interval allocated to the communication channel. Further communication reliability and performance may be reduced. For example, shorter data symbols (and thus lower symbol energies) may be required or less error correction may be needed. This may directly lead to a lower data rate.

The reduced communication performance may affect the overall performance of a wireless power transfer system. It may reduce the possible functions due to reduced communication capacity (e.g. there may not be sufficient time to perform the communication required for some functions) and/or reduce the performance of some implemented functions (such as reducing the reaction time or accuracy of a power control loop).

Indeed, in order to provide efficient control of the power transfer, it is desirable to have a high communication data rate between the power transmitter and the power receiver.

In the following, an approach is described that may allow improved performance in many scenarios and for many applications. The approach may specifically allow, facilitate, or improve simultaneous communication in the two directions. The approach may typically allow reduced interference between the communications such that the detection/ demodulation of communication in one direction may be less affected by communication in the other direction. In some cases, the detection/ demodulation of communication in the other direction may also be less sensitive, and thus in many embodiments overall cross-interference in both directions may be reduced thereby allowing or improving simultaneous communication in the two opposite directions.

In the approach, a first modulation scheme (which may be the forward modulation scheme or the reverse modulation scheme) is a modulation scheme in which each data symbol value is represented by a sequence of time intervals and with each time interval having a constant modulation level that is dependent on the data symbol value. In the first modulation scheme each data symbol may be represented by a pattern of sequential modulation levels with the pattern being different for different data symbols. The modulation levels for each time interval may be selected from a set of modulation levels. In some applications, the patterns for all possible data symbols may comprise different modulation levels. In other applications, one or more data symbols may comprise different modulation levels whereas potentially one or more data symbols may have the same constant modulation level for all time intervals. In some applications, all time intervals for at least one data symbol may have different modulation levels. In some applications the time intervals for each data symbol of all the data symbols may have different modulation levels.

A modulation level may be a value of the parameter being modulated/ varied in dependence on the data symbol. For example, for FM a modulation level may be a frequency modulation, for LM it may be a load of the power transfer signal, for PM (Phase Modulation) it may be a phase of the power transfer signal, and for AM (Amplitude Modulation) it may be an amplitude of the power transfer signal.

A data symbol may accordingly be represented by a sequence of time intervals. For each time interval, the modulation level is set to a constant value with the value depending on the data symbol. In many applications, the modulation level for each time interval may be different for at least two of the possible data symbols.

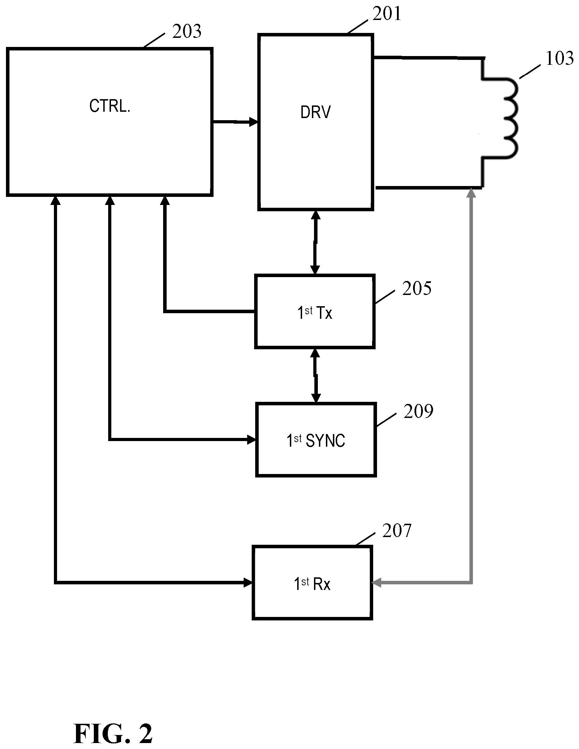

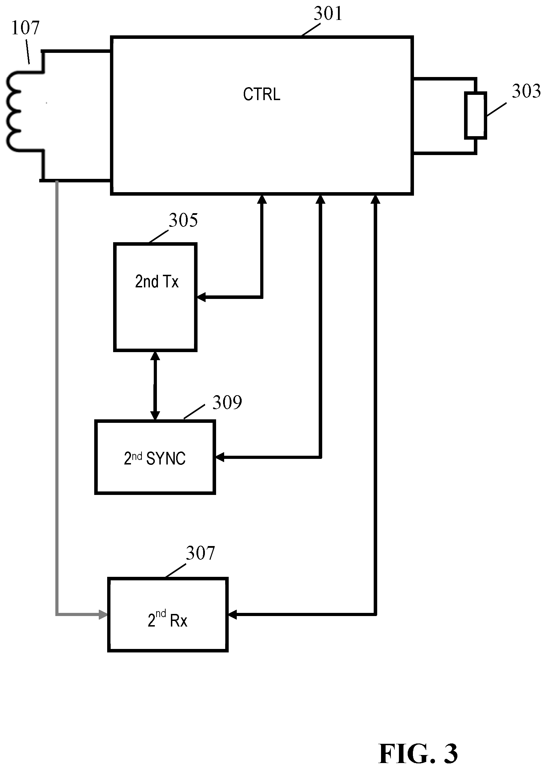

The approach will be described in further detail with reference to Fig. 2 which illustrates elements of the power transmitter 101 and Fig. 3 illustrates elements of the power receiver 105 of Fig. 1 in more detail.

Fig. 2 illustrates an example of elements of the power transmitter 101 of Fig. 1 in more detail. The transmitter coil 103 is coupled to a driver 201 which generates a drive signal for the transmitter coil 103. The driver 201 generates the current and voltage signal which is fed to the transmitter inductor 103. The driver 201 is typically a drive circuit in the form of an inverter which generates an alternating signal from a DC Voltage. The output of the driver 201 is typically a switch bridge generating the drive signal by the appropriate switching of switches of the switch bridge.

The driver 201 is coupled to a power transmitter controller 203 which is arranged to control the operation of the power transmitter 101. The power transmitter controller 203 may be arranged to control the operation of the power transmitter 101 to perform the required and desired functions associated with power transfer protocols of the system, and may specifically in the present example be arranged to control the power transmitter 101 to operate in accordance with Qi Specifications. For example, the power transmitter controller 203 may comprise functionality for detecting a power receiver, for initiating power transfer, for supporting power transfer, for terminating power transfer etc.

In the example, the power transmitter 101 further comprises a first transmitter 205 which is arranged to transmit data to the power receiver 105 using the power transfer signal as a communication carrier. The first transmitter 205 may be arranged to modulate data onto the power transfer signal using a modulation scheme. For example, the first transmitter 205 may control the driver to vary the frequency, amplitude, and/or phase of the drive signal in response to the data to be transmitted. The power transmitter controller 203 may thus transmit data to the power receiver 105 using e.g. frequency, amplitude and/or phase modulation. The first transmitter 205 may specifically be arranged to communicate messages to the power receiver by frequency modulating the power transfer signal in accordance with the Qi Specifications. The first transmitter 205 is thus arranged to transmit data to the power receiver 105 using a forward in-band communication link.

The power transmitter 101 further comprises a first receiver 207 which is arranged to receive data from the power receiver 105. The first receiver 207 may typically be arranged to receive messages from the power receiver 105 by the power receiver 105 load modulating the power transfer signal as will be known to the skilled person, e.g. from the Qi power transfer specifications.

As illustrated in the exemplary illustration of Fig. 3, the receiver coil 107 of the power receiver 105 is coupled to a power receiver controller 301 which couples the receiver coil 107 to a load 303. The power receiver controller 301 includes a power control path which converts the power extracted by the receiver coil 107 into a suitable supply for the load 303. In addition, the power receiver controller 301 may include various power receiver controller functionality required to perform power transfer, and in particular functions required to perform power transfer in accordance with the Qi Specifications.

The power receiver 105 further comprises a second transmitter 305 which is arranged to communicate with the first transmitter 205 using the power transfer signal as a carrier. Thus, the first receiver 207 and the second transmitter 305 establish an in-band communication link.

In the specific example, the second transmitter 305 is arranged to modulate the power transfer signal by load modulation and the first receiver 207 is arranged to decode the load modulation to recover the transmitted data. It will be appreciated that techniques and approaches for load modulation (and demodulation) are known to the skilled person and will for brevity not be described further herein.

The power receiver 105 further comprises a second receiver 307 which is arranged to receive the data transmitted from the first transmitter 205, and thus is arranged to demodulate the modulation of the power transfer signal performed by the first transmitter 205 in order to demodulate the data transmitted by the first transmitter 205. In the specific example, the second receiver 307 comprises an FM demodulator arranged to demodulate the FM modulation of the first transmitter 205.

Thus, the power receiver and power transmitter establish two in-band communication channels in respectively the forward and reverse direction thereby allowing bidirectional communication. The communication in the forward direction is performed in accordance with one modulation scheme, henceforth referred to as the forward modulation scheme, and the communication in the reverse direction is performed in accordance with another modulation scheme, henceforth referred to as the reverse modulation scheme. The modulation schemes are typically selected to be different in the two directions, i.e. the forward and reverse modulation schemes are typically different and use different types of modulation. In many embodiments, the two modulation schemes may employ different modulation formats, and specifically may use different selections from the group of frequency modulation, load modulation, phase modulation, and amplitude modulation (although other modulation formats may also be used in some applications). In the specific example, the forward modulation scheme employs frequency modulation (FM) and the reverse modulation scheme employs load modulation (LM)

The two communication links may potentially cause cross-interference as they both use the power transfer signal as a communication carrier. However, rather than employing time division between the communications, the described system employs simultaneous communication in both directions. This simultaneous communication is supported by interference mitigating approaches as will be set out in the following.

In many embodiments, the set of modulation levels may comprise only two modulation levels, i.e. the modulation of the power transfer signal may for each time interval be set to one of two different modulation levels. In such an example, the data symbols may accordingly be represented by a sequence and pattern of binary modulation levels. Further, in many embodiments, the data symbols may be binary symbols and thus the modulation according to the first modulation scheme may one of selecting between two different sequences/ patterns of modulation levels.

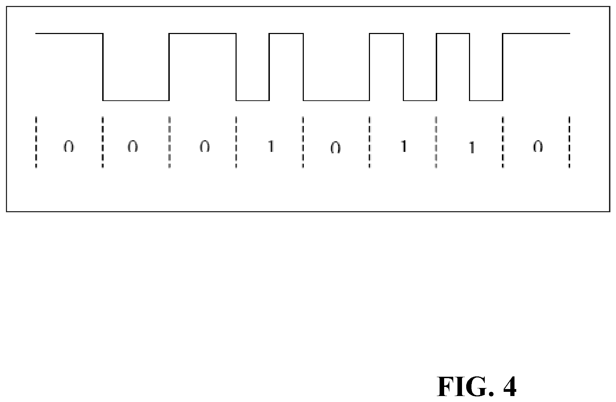

As a specific example, the first modulation scheme may employ a biphase or Manchester code. In such a case, each data symbol may be transmitted as one of two sequences with each of these being divided into two time intervals. Specifically, for one of bit values the sequence may comprise two time intervals (also referred to as a half-bits) that have the same constant modulation level and for the other bit value the sequence may comprise two time intervals (half-bits) that have different constant modulation levels. Thus, in this case, one bit value is represented by no change of the modulation parameter value and the other bit value is represented by a change of the modulation parameter value. Such an example is illustrated in Fig. 4. As another example, in some embodiments, the modulation levels may be selected differently in both time intervals.

The first modulation scheme thus uses an approach where the data symbol duration is divided into time intervals where for each time interval the modulation level is constant and where for at least or more time intervals, the modulation level is different for different data symbols. In many applications, the time intervals have a constant duration, i.e. all time intervals may be of the same duration.

The second modulation scheme employs a modulation scheme in which the symbol duration for data symbols of the second modulation scheme is a divisor of a duration of at least one time interval of the sequence of time intervals, and typically of all the time intervals. The duration of one, and typically all, of the time intervals are thus a multiple of the duration of the data symbols of the second modulation scheme. The divisor/ multiple may be any integer including one, i.e. the symbol duration of the second modulation scheme may specifically be identical to a duration of the plurality of time intervals.

Accordingly, in the time for which a single time interval of a constant modulation level is transmitted in accordance with the first modulation scheme, one or more full symbols may be transmitted in accordance with the second modulation scheme.

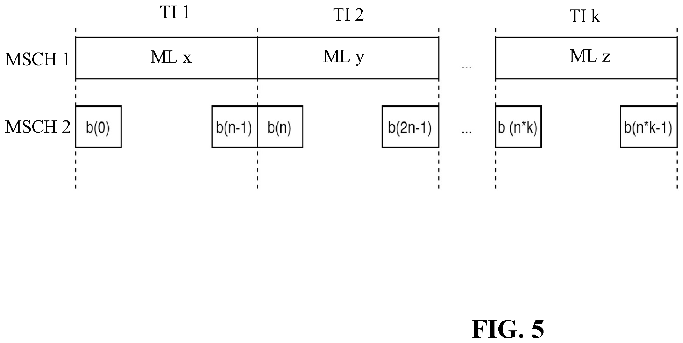

An example of the approach is illustrated in Fig. 5. Fig. 5 illustrates the transmission of a single data symbol in accordance with the first modulation scheme where this is transmitted by a sequence of k time intervals TI where the modulation level is constant for each time interval (e.g. constant frequency or load). For each time interval, n data symbols are transmitted in the other direction using the second modulation scheme, where n is an integer larger than or equal to one.

The symbol rate for the second modulation scheme is higher than the symbol rate. for the first modulation scheme. For the number of data symbols of the second modulation scheme transmitted per time interval being equal to one, i.e. for the symbol duration of the second modulation scheme being equal to the duration of a time interval, the data rate of the second modulation scheme will be higher than the data rate of the first modulation scheme by a factor corresponding to the number of time intervals in the sequences representing data symbols in accordance with the first modulation scheme.

In the system, the communications in the two directions, i.e. in accordance with the two modulation schemes, is further synchronized such that the data transmitted in accordance with the second modulation scheme is synchronized to the transmission of data in accordance with the first modulation scheme, and specifically the data symbol durations may be aligned with the time intervals of the sequence. Thus, specifically, the symbol start and/or end times for the transmissions according to the modulation schemes may be aligned with the start and/or end times of the time intervals of data transmitted in accordance with the first modulation scheme.

Further, the transmissions may be aligned with the power transfer signal. For example, the start/end times of data symbols and/or time intervals may be aligned with zero crossings, peaks, transitions, or specific points/phases of the cycles of the power transfer signal. Accordingly, the transmissions in both directions may be aligned with and synchronized to the power transfer signal. Further, the alignment and synchronization of the transmissions in the two directions, and specifically the alignment between the data symbols of the second modulation scheme and the time intervals of the first modulation scheme, may be achieved by synchronizing both transmissions with the power transfer signal. Such an approach may provide accurate yet low complexity synchronization.

The communication may in particular in many embodiments synchronize the power receiver and the power transmitter communication with the power signal and thereby with each other. Full duplex with variable data/ baud rate may be applied and the system may align bit communication (including multi-bit sequences) in one communication channel with stable and constant modulation levels in the complementary channel. The approach may facilitate and often enable or allow efficient full duplex communication.

In the approach the transmissions at the slower rate (in accordance with the first modulation scheme) may be synchronized such that the modulation state is kept constant during transmissions of one or more entire data symbols for the transmissions at the faster rate (in accordance with the second modulation scheme). In many embodiments, the transmitter operating in accordance with the first modulation scheme may transmit several bits or bytes per constant modulation level of the transmitter transmitting in accordance with the second modulation scheme.

The synchronized and aligned communication may substantially reduce the cross-interference and may in many embodiments allow and improve simultaneous communication in opposite directions using the power transfer signal as a common communication carrier. In particular, the transmissions in accordance with the second modulation scheme may be achieved while the transmissions in accordance with the first modulation scheme providing no or reduced interference. In many embodiments, improved communication can be achieved with, in particular, the receiving of transmissions in accordance with the second modulation scheme being possible with improved reliability. For example, reduced error rates for a given symbol energy can often be achieved by the interference being reduced.

The approach may allow improved communication and in particular may in many embodiments enable full duplex simultaneous communication in both directions between the power transmitter and the power receiver. In particular, the performance of the higher data rate communication may often be substantially improved by the reduced interference. This is particularly attractive in many scenarios as higher data rates tend to be more sensitive to interference (as it may often have reduced symbol energy). The approach may be particularly suitable for wireless power transfer where the communication requirements are often asymmetric. For example, in many embodiments, a substantially higher data rate may be provided in one direction than in the other direction while allowing the higher data rate communication to still achieve a low error rate and reliable performance.

In the following, a particular example will be described with respect to an approach wherein the high data rate communication is from the power transmitter to the power receiver, i.e. where the first transmitter 205 is transmitting data in accordance with the second modulation scheme and the second transmitter is transmitting data in accordance with the first modulation scheme. In the example, the second modulation scheme is an FM modulation scheme and thus the power transmitter/ first transmitter 205 is arranged to FM modulate the power transfer signal.

The first transmitter 205 may specifically be arranged to transmit data symbols such as binary data symbols using Frequency Shift Keying (FSK) where each data symbol value (bit for a binary modulation scheme) is represented by the power transfer signal being set to a specific frequency which is unique for that data symbol. The first transmitter 205 may be arranged to transmit the FSK symbol at a high data rate, such as specifically with a data rate of e.g. 0.1 kbps to 100 kbps.

In the example, the second transmitter 305 is arranged to transmit data in accordance with the first modulation scheme which in this case may use load modulation, and specifically may use a biphase/ Manchester coding. In the example, the first modulation scheme may use load modulation and thus the power receiver/ second transmitter 305 is arranged to load modulate the power transfer signal. The load modulation is such that each data symbol is represented by a pattern/ sequence of a set of load levels with the load level being constant in each time interval. In many embodiments, the load modulation may be a binary combination and thus the second transmitter 305 may select between two sequences/ patterns of constant load levels depending on the bit value being transmitted. In many embodiments, the patterns/ sequences may be a pattern/ sequence of binary load levels. For each time interval, one out of two load levels may be selected with the resulting pattern/ sequence corresponding to the data symbol or bit to be transmitted.

The data (symbol) rate of the load modulation is lower than the data (symbol) rate for the FM modulation. The second transmitter 305 may be arranged to transmit the load modulation symbol at a lower data rate, such as specifically with a data rate of e.g. 1 kbps to 200 kbps.

The power transmitter comprises a first synchronizer 209 which is arranged to synchronize the first transmitter 205 to transmit data in alignment with and synchronized to the power transfer signal. For example, the transmissions may be synchronized such that the symbols have start and/or end times that are in line with zero crossings of the power transfer signal or with minima of periodic amplitude variations of the power transfer signal.

Similarly, the power receiver comprises a second synchronizer 309 which is arranged to synchronize the second transmitter 305 to transmit data aligned with and synchronized to the power transfer signal. For example, the transmissions may be synchronized such that the symbols have start and/or end times that are in line with zero crossings of the power transfer signal or with minima of periodic amplitude variations of the power transfer signal.

In some embodiments, the first synchronizer 209 and/or the second synchronizer 309 may be arranged to synchronize the respective data transmissions to the timing of the cycles of the power transfer signal. The frequency of the power transfer signal may typically be in the range from 20kHz to 500kHz. The first synchronizer 209 and/or the second synchronizer 309 may synchronize to these cycles such that e.g. each symbol is started at a zero crossing or peak of the cycle.

In many embodiments, data symbols may have a duration of several and possibly many cycles. The synchronizer may further be arranged to synchronize the transmission of data in response to a timing of data received by the receiver of the device. Thus, the transmission of data in accordance with the second modulation scheme may be adapted by the synchronizer in response to a timing of data received in accordance with the second modulation scheme. Specifically, the synchronizer may be able to detect modulation level changes for received data and align the transmission of data symbols by the transmitter to be aligned with the modulation level changes. Specifically, the synchronizer may detect the changes in modulation level and then adapt the transmission such that the start of a new symbol coincides with a zero crossing of the power transfer signal closest to such modulation level changes.

For example, the first synchronizer 209 may be arranged to detect changes in the load level caused by the load modulation by the second transmitter 305. Based on such load level changes the timing of the time intervals can be determined. For example, if time intervals are determined to have a duration corresponding to, say, 10 cycles of the power transfer signal, the first synchronizer 209 may operate a phase locked loop based on an error signal that reflects the difference between the time interval transitions predicted by the phase locked loop and the timings of detected level changes. Further, the predicted timings of the time interval transitions/ modulation level changes and/or the timings of the measured modulation level changes may be synchronized with (specifically quantized into) the times of the zero crossing of the power transfer signal.

Such an approach may provide a highly accurate timing of the data symbols transmitted by the first transmitter 205 such that they closely align with the time intervals in the transmission in the other direction.

It will be appreciated that in some embodiments, an equivalent approach may be applied by the second synchronizer 309 which based on modulation level changes in the transmissions from the first transmitter 205 and the timing of the power transfer signal cycles, may adapt the timing of the load modulation such that the data symbols align with the frequency changes.

The synchronization to the power transfer signal for both transmissions may allow the transmissions to be aligned and synchronized with each other. In some embodiments, the synchronization at both ends may only be performed by synchronizing to the power transfer signal and without considering specific symbol timing properties of the other communication link (being in the opposite direction).

In some embodiments, one or both synchronizers may be arranged to synchronize the timing of data transmissions of the corresponding apparatus/ device to amplitude variations in the power transfer signal, and specifically to amplitude variations in the power transfer signal.

The amplitude variations may specifically be caused by amplitude variations in the supply power/ voltage. For example, in many embodiments, the voltage supply provided to the driver/ inverter 201 is generated directly from a mains voltage without any voltage regulation or smoothing (but possibly with some rectification) and thus may in practice often by a sinusoidal or a rectified sinusoidal supply voltage. Typically, this has a relatively low frequency of 50Hz or 60Hz (or double that if rectification is applied) and the driver generates the higher frequency drive signal from this supply voltage. The amplitude/ power level of the higher frequency drive signal accordingly varies with the supply voltage signal.

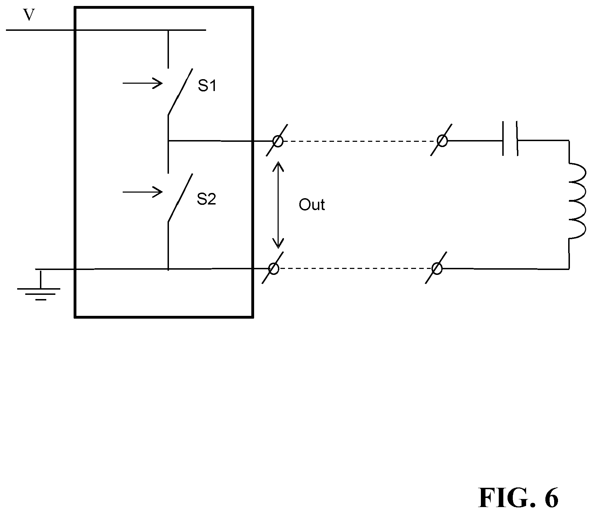

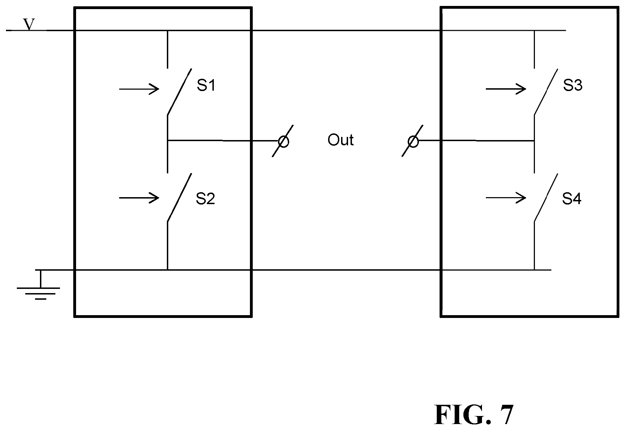

For example, the driver 201 is typically a drive circuit in the form of an inverter which generates an alternating signal from a DC Voltage. The output of the driver 201 is typically a switch bridge generating the drive signal by the appropriate switching of switches of the switch bridge. Fig. 6 shows a half-bridge switch bridge/ inverter. The switches S1 and S2 are controlled such that they are never closed at the same time. Alternatingly S1 is closed while S2 is open and S2 is closed while S1 is open. The switches are opened and closed with the desired frequency, thereby generating an alternating signal at the output. Typically, the output of the inverter is connected to the transmitter inductor via a resonance capacitor. Fig. 7 shows a full-bridge switch bridge/ inverter. The switches S1 and S2 are controlled such that they are never closed at the same time. The switches S3 and S4 are controlled such that they are never closed at the same time. Alternatingly switches S1and S4 are closed while S2 and S3 are open, and then S2 and S3 are closed while S1 and S4 or open, thereby creating a square-wave signal at the output. The switches are opened and closed with the desired frequency.

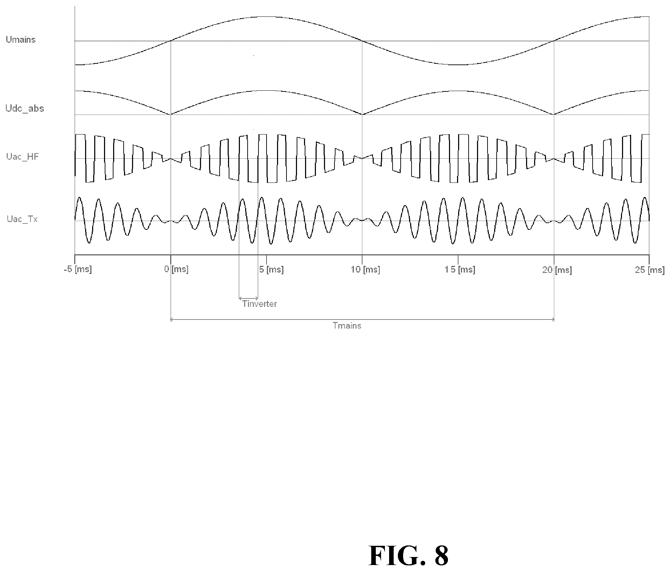

The power transmitter may typically be driven by a mains AC signal which is substantially a sine wave as shown in the first line Umains of Fig. 8. The mains voltage Umains may be rectified by an AC/DC converter to generate the voltage Udc_abs. A large storage capacitor for smoothing the rectified mains voltage is normally not applied in these kinds of applications as it will add to the total mains harmonic distortion and can be costly. As a result, a varying DC voltage is generated by the AC/DC converter and this voltage may be used to supply the driver. This may result in an output voltage of the inverter corresponding to Uac_HF. The resonance circuit, of which the transmitter coil 103 is typically part, will result in a smoothing resulting in a power transfer signal as reflected by the signal Usc_Tx in Fig. 8.

Thus, in many wireless power transfer systems, a power transfer signal is generated that has periodic amplitude variations. In such scenarios, the data transmissions may be synchronized to the variations in the power/ amplitude level and specifically may be synchronized to occur around the minima thereof, typically corresponding to the zero crossings of the supply voltage to the driver. In other examples, the synchronization may e.g. be align with a maximum of the power transfer signal.

As an example, the first synchronizer 209 may be arranged to determine minima of the amplitude of the power transfer signal. The first synchronizer 209 may specifically apply an amplitude detector to the current through the transmitter coil 103. The first synchronizer 209 may in many embodiments directly evaluate the timing of the signals of the transmitter coil 103 (or even of the electromagnetic field using e.g. a measurement coil) rather than evaluate the supply voltage etc. of the inverter of the driver in order to reflect any delay or timing offset between the power transfer signal and these signals. However, in some embodiments, the first synchronizer 209 may indeed synchronize based on the signals of the driver.

The first synchronizer 209 may be arranged to control the first transmitter 205 such that the symbol times are aligned with the power transfer signal. For example, start and stop times may be aligned to coincide with the minima (or maxima) of the power transfer signal.

In a similar way, the second synchronizer 309 may detect the amplitude variations of the induced power transfer signal and determine the timings of minima (or e.g. maxima). It may then control the second transmitter 305 to align the transmitted data symbols with the power transfer signal. For example, not only the data symbol start and end times, but also the start and end times of the time intervals, may be aligned with the minima of the amplitude variations.

In such approaches, the synchronization of both the power transmitter transmissions and the power receiver transmissions to the power transfer signal may result in these being aligned with each other without requiring that other parameters, such as specific data timings, are considered further, i.e. without necessarily requiring timing data from the receiving of data to be taking into account.

As a specific example, the first transmitter 205 may be arranged to transmit a single data symbol/ bit for every period of the power transfer signal, i.e. for every interval between two minima (thus corresponding to half a period of the input mains supply signal). The second transmitter 305 may be arranged to transmit one constant modulation level of the sequence/ pattern of modulation levels for every period of the power transfer signal, i.e. for every interval between two minima (thus corresponding to half a period of the input mains supply signal). Thus, the duration of a symbol for the transmission in accordance with the second modulation scheme is equal to the period of the power transfer signal and the duration of a single time interval for transmission in accordance with the first modulation scheme is equal to the period of the power transfer signal, and thus the duration of the data symbol for the second modulation scheme is equal to the length of the sequences/patterns times the period of the power transfer signal.

Further, in such an example, the timing of the data symbols of the first modulation scheme transmissions are aligned with the timing of the data symbols of the second modulation scheme transmissions, and indeed with the individual time intervals. Thus, the approach may allow an alignment as previously described where entire data symbols of the first modulation scheme are transmitted during times when the transmission in the other direction in accordance with the second modulation scheme has a constant modulation level.

In many embodiments, the duration of the time intervals is at least equal to the symbol duration for data symbols of the second modulation scheme. Indeed, in many embodiments, each data symbol according to the first modulation scheme may be represented by sequences of two constant modulation levels/ time intervals. Thus, the symbol rate for the second modulation scheme transmissions may be twice that of the first modulation scheme and the communication links may provide very different bandwidths/ capacities.

Indeed, in many embodiments, the asymmetry may be substantially larger and indeed in many embodiments, the duration of the time intervals is at least two times or even eight times the symbol duration for data symbols of the second modulation scheme. Such an approach may allow more data, and specifically an entire byte, to be sent in one direction during the time a single bit is sent in the other direction (assuming a scenario of binary data symbols). Thus, highly asymmetric communication may be supported.

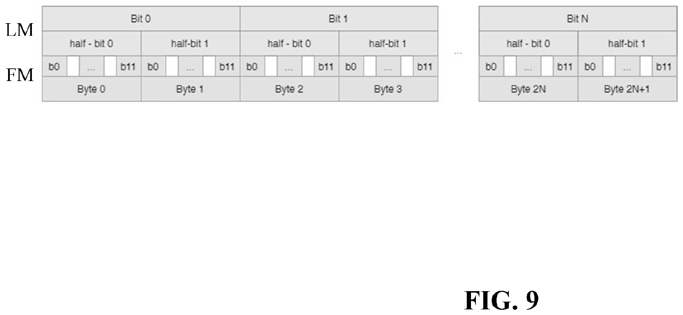

Fig. 9 illustrates an example where the first modulation scheme is adopted for communication from the power receiver to the power transmitter (i.e. by the second transmitter 305) and the second modulation scheme is adopted for communication from the power transmitter (i.e. by the first transmitter 205).

In such an example, the frequency of the power transfer signal may be around 128 kHz. The first transmitter 205 may includeg a frequency modulator that uses 8-cycles per bit modulation (16kbps at 128kHz carrier). A single byte may require 11 bits when including a start bit, stop bit, and parity bit. In the example, the second transmitter 305 may employ bi-phase modulation resulting in the shortest duration/ time interval of constant modulation level to be a half-bit (half the bit duration required for transmission of a bit). The first transmitter 205 may transmit an entire byte (including the additional bits) per load modulation half-bit (time interval) so that two entire FM bytes are transmitted in the forward direction for each load modulation bit being transmitted in the reverse direction. This may specifically result in a 727bps bitrate for the load modulation channel (16 kbps FSK channel/11 bits per byte/ 2 bytes per bit).

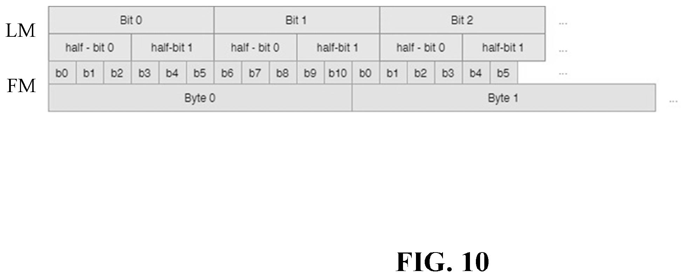

Another example is illustrated Fig. 10. In this case the first transmitter 205 transmits three bits per load modulation half-bit/ time interval so that six FM bits are sent per one load modulation bit resulting in at least 2.6kbps bitrate for load modulation channel (16 kbps FSK channel/6 bits per byte).

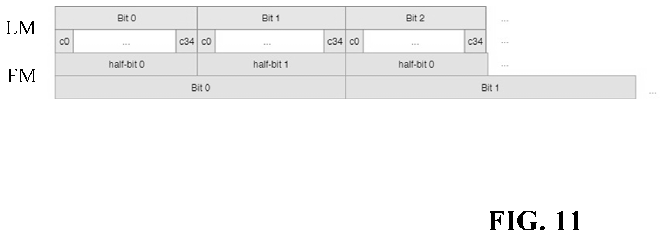

An example where the power transmitter, first transmitter 205, and the forward communication link employs the first modulation scheme and the power receiver, second transmitter 305, and reverse communication link employs the second modulation scheme is illustrated in Fig. 11. Thus, in this example, the reverse communication link, which may still use load modulation, may thus have a higher data rate, than the forward communication link, which may still use frequency modulation.

Further, in the example, the load modulation is modulated using a direct sequence spread spectrum modulation where the load modulation bits are represented by a direct sequence of a suitable number of chips. In the example, the power transfer signal may have a frequency around 128 kHz. The power receiver/ second transmitter 305 may use a direct sequence to manipulate the load with low magnitude, with in the specific example a length of the sequence of 35 chips. The power transmitter/ first transmitter 205 may employ a frequency modulator which utilizes bi-phase modulation resulting in the shortest constant modulation level being a half-bit/ symbol, i.e. with each data symbol being represented by a pattern/ sequence of two modulation levels. The second transmitter 305/ load modulator may transmit the whole direct sequence per FM half-bit thereby making the bit rate in the forward FM communication link half the bit rate of the reverse communication link.

The approach may provide substantially improved communication and may in particular mitigate interference from the slower communication link to the faster communication link.

Further, in some embodiments, the modulation level for the transmissions in the faster communication link may be selected such that the average modulation level for the transmissions of the faster communication link (in accordance with the second modulation scheme) over the symbol duration for the transmissions in the slower communication link (in accordance with the first modulation scheme) is independent of data values of the second data. Indeed, in many embodiments, the average modulation level over at least one time interval of the sequence of time intervals is independent of the data values.

For example, in the example of Figs. 9 and 10, for the FM modulation, a biphase modulation may be used where e.g. a "0" is represented by half a bit of frequency f1 followed by half a bit of frequency f2, whereas a "1" is represented by half a bit of frequency f2 followed by half a bit of f1. In this case, the power transfer signal has equal amounts of time with frequency f1 and f2 regardless of the bit being transmitted. Accordingly, the average impact/ interference of the FM transmission on amplitude variations will be the same and when averaging over the entire symbol duration, the impact of the data being transmitted can be reduced.

Thus, in such approaches, the interference from the faster communication link to the slower communication link may also be reduced/mitigated.

In some embodiments, one or both of the transmitters 205, 305 may be arranged to transmit a number (one or more) of dummy symbols in order to align a data size for the faster communication link data to the data symbols of the slower communication link. The data size may e.g. be a data packet size, data block, or e.g. a byte.

For example, the number of symbols of the faster communication link (in accordance with the second modulation scheme) that can be transmitted during a symbol time of the slower communication link may correspond to the number of faster/ shorter data symbols that can be transmitted per time interval times the number of time intervals in the sequence/ pattern. If this number does not align with the size of a given data block or packet, it may be advantageous to transmit dummy symbols (which may have any value and which may simply be ignored by the receiving apparatus) in order to align the data sizes (blocks/ packets) with the data symbols of the slower communication link.

For example, In Fig. 10, it may be preferred to transmit a dummy bit after b10 instead of transmitting b0 in order to align the start of a new byte with the new LM symbol.

In some embodiments, the transmitter transmitting at the higher data rate may be arranged to continuously transmit data unless the data of the slower data rate communication link meets a non-acknowledgement criterion. The non-acknowledgement may be a missing expected acknowledgement or e.g. a direct non-acknowledgment message.

Thus, in some cases, e.g. the first transmitter 205 may be arranged to continuously transmit data on the faster communication link. This transmission may be continued without interruption as long as the received data is being acknowledged using the slower communication link. Thus, the faster communication link may be used at maximum bandwidth/ throughput and no pauses or delays are introduced to wait or check for acknowledgement. This may be achieved due to the full duplex simultaneous communication where an acknowledgement feedback can be implemented without interrupting the fast data transmission.

If a non-acknowledgement is received (or an expected acknowledgement is not received), the transmitter may terminate the fast throughput transmissions and may proceed to perform retransmission.

Thus, a very fast communication utilizing the full capacity of the faster link can be achieved while at the same time allowing a fast and efficient feedback/ acknowledgement/ retransmission to be achieved.

As a specific example, one of the transmitters may transmit an uninterrupted byte stream with an embedded bit or byte error detection using the faster communication link with the other transmitter using the slower communication link to indicate that a byte or number of bytes were successfully received. That allows sending burst packets through the communication medium and reduces the number of re-transmissions by isolating errors.

An example in which the use of very long data packets (burst transfer) in wireless power system is beneficial, is when an authentication certificate is transferred from the power transmitter to the power receiver through the frequency modulation channel.

It is desired to reduce the time of authentication certificate transfer, so, providing an uninterrupted byte stream in the faster link (typically the FM forward link) may be highly advantageous. However, in case of an error, without timely error detection and correction, the certificate must be retransmitted completely, doubling the time of authentication.

In this case, the load modulation channel is utilized to let the power transmitter know whether the last byte (or number of bytes) was received without error(s).

The invention can be implemented in any suitable form including hardware, software, firmware or any combination of these. The invention may optionally be implemented at least partly as computer software running on one or more data processors and/or digital signal processors. The elements and components of an embodiment of the invention may be physically, functionally and logically implemented in any suitable way. Indeed the functionality may be implemented in a single unit, in a plurality of units or as part of other functional units. As such, the invention may be implemented in a single unit or may be physically and functionally distributed between different units, circuits and processors.

Although the present invention has been described in connection with some embodiments, it is not intended to be limited to the specific form set forth herein. Rather, the scope of the present invention is limited only by the accompanying claims. Additionally, although a feature may appear to be described in connection with particular embodiments, one skilled in the art would recognize that various features of the described embodiments may be combined in accordance with the invention. In the claims, the term comprising does not exclude the presence of other elements or steps.

Furthermore, although individually listed, a plurality of means, elements, circuits or method steps may be implemented by e.g. a single circuit, unit or processor. Additionally, although individual features may be included in different claims, these may possibly be advantageously combined, and the inclusion in different claims does not imply that a combination of features is not feasible and/or advantageous. Also the inclusion of a feature in one category of claims does not imply a limitation to this category but rather indicates that the feature is equally applicable to other claim categories as appropriate. Furthermore, the order of features in the claims do not imply any specific order in which the features must be worked and in particular the order of individual steps in a method claim does not imply that the steps must be performed in this order. Rather, the steps may be performed in any suitable order. In addition, singular references do not exclude a plurality. Thus references to "a", "an", "first", "second" etc. do not preclude a plurality. Reference signs in the claims are provided merely as a clarifying example shall not be construed as limiting the scope of the claims in any way.

### LIST OF EMBODIMENTS

*1. A power transfer apparatus for wireless power transfer from a power transmitter (101) to a power receiver (103), the power transfer apparatus being one of the power transmitter (101) and the power receiver (101, 103) , the power transfer apparatus comprising:*
   *a power transfer coil (103, 107) arranged to exchange power with a complementary power transfer coil (107, 103) of a complementary power transfer apparatus via a power transfer signal, the complementary power transfer apparatus being the other of the power transmitter (101) and the power receiver (105);*
   *a receiver (207, 307) arranged to receive first data from the complementary power transfer apparatus, the first data being modulated onto the power transfer signal in accordance with a first modulation scheme in which each data symbol is represented by a sequence of time intervals each having a constant modulation level dependent on a data symbol value for the data symbol, the sequence of time intervals being synchronized to the power transfer signal;*
   *a transmitter (205, 305) arranged to transmit second data to the complementary power transfer apparatus by modulating the power transfer signal in accordance with a second modulation scheme, a symbol duration for data symbols of the second modulation scheme being a divisor of a duration of at least one time interval of the sequence of time intervals; and*
   *a synchronizer (209, 309) arranged to synchronize the transmitter (205, 305) to transmit the second data aligned with the first data by synchronizing the transmission of the second data to the power transfer signal.*
*2. The power transfer apparatus of embodiment 1 wherein the duration of the time intervals is at least twice the symbol duration for data symbols of the second modulation scheme.*
*3. The power transfer apparatus of any of the previous embodiments wherein the duration of the time intervals is at least eight times the symbol duration for data symbols of the second modulation scheme.*
*4. The power transfer apparatus of any of the previous embodiments wherein the first modulation scheme employs biphase modulation.*
*5. The power transfer apparatus of any of the previous embodiments wherein an average modulation level for the transmission of the second data over a symbol duration for the transmission of the first data is independent of data values of the second data.*
*6. The power transfer apparatus of any of the previous embodiments wherein the transmitter (205, 305) is arranged to transmit a number of dummy symbols in order to align a data size for the second data to a symbol duration for the first data.*
*7. The power transfer apparatus of any previous embodiment wherein the transmitter (205, 305) is arranged to continuously transmit second data unless the first data meets a non-acknowledgement criterion.*
*8. The power transfer apparatus of embodiment 7 wherein the transmitter (205, 305) is arranged to retransmit second data in response to the first data meeting the non-acknowledgement criterion.*
*9. The power transfer apparatus of any of the previous embodiments wherein the power transfer apparatus is the power receiver (105), the first modulation scheme uses frequency modulation, and the second modulation scheme uses load modulation.*
*10. The power transfer apparatus of any of the previous embodiments wherein the power transfer apparatus is the power transmitter (101), the first modulation scheme uses load modulation, and the second modulation scheme uses frequency modulation.*
*11. The power transfer apparatus of any of the previous embodiments wherein the synchronizer (209, 309) is arranged to synchronize the transmitter in response to an amplitude variation of the power transfer signal.*
*12. The power transfer apparatus of any of the previous embodiments wherein the synchronizer (209, 309) is arranged to synchronize the transmitter in response to cycles of the power transfer signal.*
*13. A power transfer system comprising a power receiver (103) and power transmitter (101) for performing a wireless power transfer from to the power receiver (103),*
   *the power transmitter (101) comprising:*
   *a first power transfer coil (103) arranged to transfer power to a second power transfer coil (107) of the power receiver (103) via a power transfer signal;*
   *a first receiver (205) arranged to receive first data from the power receiver (103), the first data being modulated onto the power transfer signal in accordance with a first modulation scheme in which each data symbol is represented by a sequence of time intervals each having a constant modulation level dependent on a data symbol value for the data symbol, the sequence of time intervals being synchronized to the power transfer signal;*
   *a first transmitter (207) arranged to transmit second data to the power receiver (101) by modulating the power transfer signal in accordance with a second modulation scheme, a symbol duration for data symbols of the second modulation scheme being a divisor of a duration of at least one time interval of the sequence of time intervals; and*
   *a first synchronizer (209) arranged to synchronize the transmitter to transmit the second data aligned with the first data by synchronizing the transmission of the second data to the power transfer signal; and*
   *the power receiver (103) comprising:*
      *a second power transfer coil (107) arranged to receive power from the first power transfer coil (103) of the power transmitter (101) via the power transfer signal;*
      *a second transmitter (305) arranged to transmit first data to the power transmitter (101) in accordance with the second modulation scheme;*
      *a second receiver (307) arranged to receive second data from the power transmitter (101) in accordance with the a second modulation scheme; and*
      *a second synchronizer (309) arranged to synchronize the second transmitter (305) to transmit the first data with time intervals of the sequence of time intervals aligned with the power transfer signal.*
*14. A method of operation for a power transfer apparatus for wireless power transfer from a power transmitter (101) to a power receiver (103), the power transfer apparatus being one of the power transmitter(101) and the power receiver (103), the power transfer apparatus comprising:*
   *a power transfer coil (103, 107) arranged to exchange power with a complementary power transfer coil (107, 103) of a complementary power transfer apparatus via a power transfer signal, the complementary power transfer apparatus being the other of the power transmitter (101) and the power receiver (105);*
   *the method comprising:*
      *receiving first data from the complementary power transfer apparatus, the first data being modulated onto the power transfer signal in accordance with a first modulation scheme in which each data symbol is represented by a sequence of time intervals each having a constant modulation level dependent on a data symbol value for the data symbol, the sequence of time intervals being synchronized to the power transfer signal;*
      *transmitting second data to the complementary power transfer apparatus by modulating the power transfer signal in accordance with a second modulation scheme, a symbol duration for data symbols of the second modulation scheme being a divisor of a duration of at least one time interval of the sequence of time intervals; and*
      *synchronizing the transmission of the second data to be aligned with the first data by synchronizing the transmission of the second data to the power transfer signal.*
*15. A method of operation for a power transfer system comprising a power receiver (103) and power transmitter (101) for performing a wireless power transfer from to the power receiver (103),*
   *the power transmitter comprising a first power transfer coil (103) arranged to transfer power to a second power transfer coil (107) of the power receiver (103) via a power transfer signal and the power receiver comprising the second power transfer coil (107) arranged to receive power from the first power transfer coil (107, 103) of the power transmitter (101) via the power transfer signal;*
   *the method comprising the power transmitter (101) performing the steps of:*
      *receiving first data from the power receiver (103), the first data being modulated onto the power transfer signal in accordance with a first modulation scheme in which each data symbol is represented by a sequence of time intervals each having a constant modulation level dependent on a data symbol value for the data symbol, the sequence of time intervals being synchronized to the power transfer signal;*
      *transmitting second data to the power receiver (103) by modulating the power transfer signal in accordance with a second modulation scheme, a symbol duration for data symbols of the second modulation scheme being a divisor of a duration of at least one time interval of the sequence of time intervals; and*
      *synchronizing the transmission of the second data to be aligned with the first data by synchronizing the transmission of the second data to the power transfer signal; and*
      *the power receiver (103) performing the steps of:*
         *transmitting first data to the power transmitter (101) in accordance with the second modulation scheme;*
         *receiving second data from the power transmitter (101) in accordance with the a second modulation scheme; and*
         *synchronizing the transmission of the first data to be aligned with the time intervals of the sequence of time intervals by synchronizing the transmission of the second data to the power transfer signal.*

## Claims

1. A power transfer apparatus for wireless power transfer from a power transmitter (101) to a power receiver (103), the power transfer apparatus being one of the power transmitter (101) and the power receiver (101, 103) , the power transfer apparatus comprising:
a power transfer coil (103, 107) arranged to exchange power with a complementary power transfer coil (107, 103) of a complementary power transfer apparatus via a power transfer signal, the complementary power transfer apparatus being the other of the power transmitter (101) and the power receiver (105);
a receiver (207, 307) arranged to receive first data from the complementary power transfer apparatus, the first data being modulated onto the power transfer signal in accordance with a first modulation scheme in which each data symbol is represented by a sequence of time intervals each having a constant modulation level dependent on a data symbol value for the data symbol, the sequence of time intervals being synchronized to the power transfer signal;
a transmitter (205, 305) arranged to transmit second data to the complementary power transfer apparatus by modulating the power transfer signal in accordance with a second modulation scheme, a symbol duration for data symbols of the second modulation scheme being a divisor of a duration of at least one time interval of the sequence of time intervals; and
a synchronizer (209, 309) arranged to synchronize the transmitter (205, 305) to transmit the second data aligned with the first data by synchronizing the transmission of the second data to the power transfer signal;
wherein the receiver (207, 307) and the transmitter (205, 305) are arranged to simultaneously receive the first data and transmit the second data during a power transfer phase.

2. The power transfer apparatus of claim 1 wherein the duration of the time intervals is at least twice the symbol duration for data symbols of the second modulation scheme.

3. The power transfer apparatus of any of the previous claims wherein the duration of the time intervals is at least eight times the symbol duration for data symbols of the second modulation scheme.

4. The power transfer apparatus of any of the previous claims wherein the first modulation scheme employs biphase modulation.

5. The power transfer apparatus of any of the previous claims wherein an average modulation level for the transmission of the second data over a symbol duration for the transmission of the first data is independent of data values of the second data.

6. The power transfer apparatus of any of the previous claims wherein the transmitter (205, 305) is arranged to transmit a number of dummy symbols in order to align a data size for the second data to a symbol duration for the first data.

7. The power transfer apparatus of any previous claim wherein the transmitter (205, 305) is arranged to continuously transmit second data unless the first data meets a non-acknowledgement criterion.

8. The power transfer apparatus of claim 7 wherein the transmitter (205, 305) is arranged to retransmit second data in response to the first data meeting the non-acknowledgement criterion.

9. The power transfer apparatus of any of the previous claims wherein the power transfer apparatus is the power receiver (105), the first modulation scheme uses frequency modulation, and the second modulation scheme uses load modulation.

10. The power transfer apparatus of any of the previous claims wherein the power transfer apparatus is the power transmitter (101), the first modulation scheme uses load modulation, and the second modulation scheme uses frequency modulation.

11. The power transfer apparatus of any of the previous claims wherein the synchronizer (209, 309) is arranged to synchronize the transmitter in response to an amplitude variation of the power transfer signal.

12. The power transfer apparatus of any of the previous claims wherein the synchronizer (209, 309) is arranged to synchronize the transmitter in response to cycles of the power transfer signal.

13. A power transfer system comprising a power receiver (103) and power transmitter (101) for performing a wireless power transfer from to the power receiver (103),
the power transmitter (101) comprising:
a first power transfer coil (103) arranged to transfer power to a second power transfer coil (107) of the power receiver (103) via a power transfer signal;
a first receiver (205) arranged to receive first data from the power receiver (103), the first data being modulated onto the power transfer signal in accordance with a first modulation scheme in which each data symbol is represented by a sequence of time intervals each having a constant modulation level dependent on a data symbol value for the data symbol, the sequence of time intervals being synchronized to the power transfer signal;
a first transmitter (207) arranged to transmit second data to the power receiver (101) by modulating the power transfer signal in accordance with a second modulation scheme, a symbol duration for data symbols of the second modulation scheme being a divisor of a duration of at least one time interval of the sequence of time intervals; and
a first synchronizer (209) arranged to synchronize the transmitter to transmit the second data aligned with the first data by synchronizing the transmission of the second data to the power transfer signal; and
the power receiver (103) comprising:
a second power transfer coil (107) arranged to receive power from the first power transfer coil (103) of the power transmitter (101) via the power transfer signal;
a second transmitter (305) arranged to transmit first data to the power transmitter (101) in accordance with the second modulation scheme;
a second receiver (307) arranged to receive second data from the power transmitter (101) in accordance with the a second modulation scheme; and
a second synchronizer (309) arranged to synchronize the second transmitter (305) to transmit the first data with time intervals of the sequence of time intervals aligned with the power transfer signal;
wherein the first receiver (205) and the first transmitter (207) are arranged to simultaneously receive the first data and transmit the second data during a power transfer phase.

14. A method of operation for a power transfer apparatus for wireless power transfer from a power transmitter (101) to a power receiver (103), the power transfer apparatus being one of the power transmitter(101) and the power receiver (103), the power transfer apparatus comprising:
a power transfer coil (103, 107) arranged to exchange power with a complementary power transfer coil (107, 103) of a complementary power transfer apparatus via a power transfer signal, the complementary power transfer apparatus being the other of the power transmitter (101) and the power receiver (105);
the method comprising:
receiving, during a power transfer phase, first data from the complementary power transfer apparatus, the first data being modulated onto the power transfer signal in accordance with a first modulation scheme in which each data symbol is represented by a sequence of time intervals each having a constant modulation level dependent on a data symbol value for the data symbol, the sequence of time intervals being synchronized to the power transfer signal;
transmitting, during a power transfer phase, second data to the complementary power transfer apparatus by modulating the power transfer signal in accordance with a second modulation scheme, a symbol duration for data symbols of the second modulation scheme being a divisor of a duration of at least one time interval of the sequence of time intervals; and
synchronizing the transmission of the second data to be aligned with the first data by synchronizing the transmission of the second data to the power transfer signal.

15. A method of operation for a power transfer system comprising a power receiver (103) and power transmitter (101) for performing a wireless power transfer from to the power receiver (103),
the power transmitter comprising a first power transfer coil (103) arranged to transfer power to a second power transfer coil (107) of the power receiver (103) via a power transfer signal and the power receiver comprising the second power transfer coil (107) arranged to receive power from the first power transfer coil (107, 103) of the power transmitter (101) via the power transfer signal;
the method comprising the power transmitter (101) performing the steps of:
receiving, during a power transfer phase, first data from the power receiver (103), the first data being modulated onto the power transfer signal in accordance with a first modulation scheme in which each data symbol is represented by a sequence of time intervals each having a constant modulation level dependent on a data symbol value for the data symbol, the sequence of time intervals being synchronized to the power transfer signal;
transmitting, during a power transfer phase, second data to the power receiver (103) by modulating the power transfer signal in accordance with a second modulation scheme, a symbol duration for data symbols of the second modulation scheme being a divisor of a duration of at least one time interval of the sequence of time intervals; and
synchronizing the transmission of the second data to be aligned with the first data by synchronizing the transmission of the second data to the power transfer signal; and
the power receiver (103) performing the steps of:
transmitting first data to the power transmitter (101) in accordance with the second modulation scheme;
receiving second data from the power transmitter (101) in accordance with the a second modulation scheme; and
synchronizing the transmission of the first data to be aligned with the time intervals of the sequence of time intervals by synchronizing the transmission of the second data to the power transfer signal.
